# EUROPÄISCHE PATENTSCHRIFT

(11) **EP 1 258 118 B1**
(45) Veröffentlichungstag und Bekanntmachung des Hinweises auf die Patenterteilung: **28.04.2004**
(21) Anmeldenummer: 01900458.9
(22) Anmeldetag: 16.01.2001
(51) Int. Cl.: H04L 25/49

(54) **VERFAHREN UND ANORDNUNG ZUR DATEN- UND TAKTRÜCKGEWINNUNG BEI EINEM BIPHASE-CODIERTEN DATENSIGNAL**
METHOD AND SYSTEM FOR DATA AND TIMING RECOVERY IN A BI-PHASE CODED DATA SIGNAL
PROCEDE ET DISPOSITIF POUR LA RECUPERATION DE RYTHMES ET DE DONNEES SUR UN SIGNAL DE DONNEES CODE BIPHASE

(30) Priorität: 21.02.2000 DE 10007783
(43) Veröffentlichungstag der Anmeldung: 20.11.2002
(73) Patentinhaber: Rohde & Schwarz GmbH & Co. KG, D-81671 München (DE)
(72) Erfinder: SCHMIDT, Peter, 81739 München (DE)
(74) Vertreter: Körfer, Thomas, Dipl.-Phys.
(86) Internationale Anmeldenummer: PCT/EP2001/000437
(87) Internationale Veröffentlichungsnummer: WO 2001/063865

(56) Entgegenhaltungen:
- DE-A- 4 408 963
- US-A- 5 953 386
- HOOIJMANS P W ET AL: "PENALTY FREE BIPHASE LINECODING FOR PATTERN INDEPENDENT FSK COHERENT TRANSMISSION SYSTEMS" JOURNAL OF LIGHTWAVE TECHNOLOGY, Bd. 8, Nr. 3, 1. März 1990 (1990-03-01), Seiten 323-326, XP000136398 IEEE, NEW YORK, US ISSN: 0733-8724

## Beschreibung

Die Erfindung betrifft ein Verfahren und eine Anordnung laut Oberbegriff des Hauptanspruches.

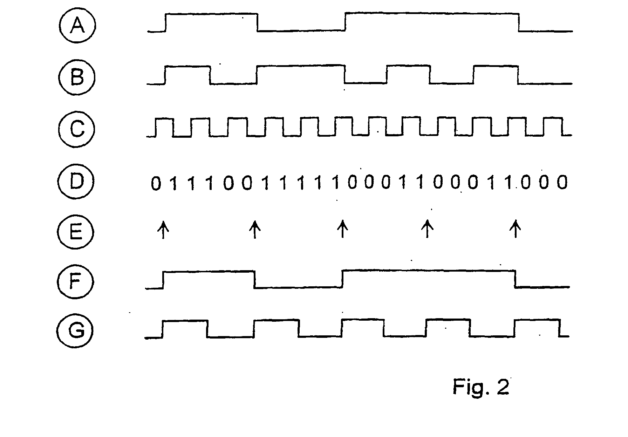

Es gibt zwei Arten von Biphase-Codes, den sogenannten Biphase-mark und den sogenannten Biphase-space Code. Beim Biphase-mark Code werden die logischen Einsen, beim Biphase-space Code die logischen Nullen besonders kodiert. Beim Biphase-mark Code gibt es zwischen den Datenbits des Datensignals immer einen Wechsel der logischen Zustände, bei einer logischen Eins gibt es zusätzlich noch einen Wechsel in der Datenbitmitte, bei einer logischen Null dagegen nicht. Zeilen A und B gemäß Figur 2 zeigen diesen Zusammenhang. Analoges gilt für den Biphase-space Code.

Zur Datenrückgewinnung eines solchen biphase-codierten Datensignals muß empfangsseitig der Bittakt rückgewonnen werden. Dazu ist es bekannt, einen phasensynchronisierten Taktgenerator (PLL) zu benutzen, der exakt auf die doppelte Bitfrequenz des Datensignals geregelt ist. Bei höheren Datenraten ist es jedoch schwierig, die geforderte genaue Phasenbeziehung zwischen der Taktfrequenz und den Biphase-Daten einzuhalten, was für eine sichere Datendekodierung nötig ist.

Es ist daher Aufgabe der Erfindung, ein Verfahren aufzuzeigen, mit dem auch bei höheren Datenraten die Taktrückgewinnung für ein biphase-codiertes Datensignal möglich ist.

Diese Aufgabe wird ausgehend von einem Verfahren laut Oberbegriff des Hauptanspruches durch dessen kennzeichnende Merkmale gelöst. Vorteilhafte Weiterbildungen, insbesondere bezüglich einer besonders einfachen Anordnung zum Ausführen dieses Verfahrens, ergeben sich aus den Unteransprüchen.

Gemäß der Erfindung wird mit einem unkorrelierten Takt gearbeitet und es werden über die Abtastwerte und die Festlegung der Bitgrenzen die ursprünglichen Datenbits regeneriert, aus denen dann auf einfache Weise der Bittakt ableitbar ist. Eine besonders genaue und von Datenjitter und Taktungenauigkeiten unabhängige Taktrückgewinnung ergibt sich, wenn der die Abtastfrequenz liefernde phasengeregelte Oszillator auf die so rückgewonnenen Biphase-Daten synchronisiert wird.

Das erfindungsgemäße Verfahren ist sowohl für Biphase-mark - als auch für Biphasespace-codierte Datensignale anwendbar.

Die Erfindung wird im Folgenden anhand schematischer Zeichnungen an einem Ausführungsbeispiel für ein Biphase-mark-codiertes Signal näher erläutert.

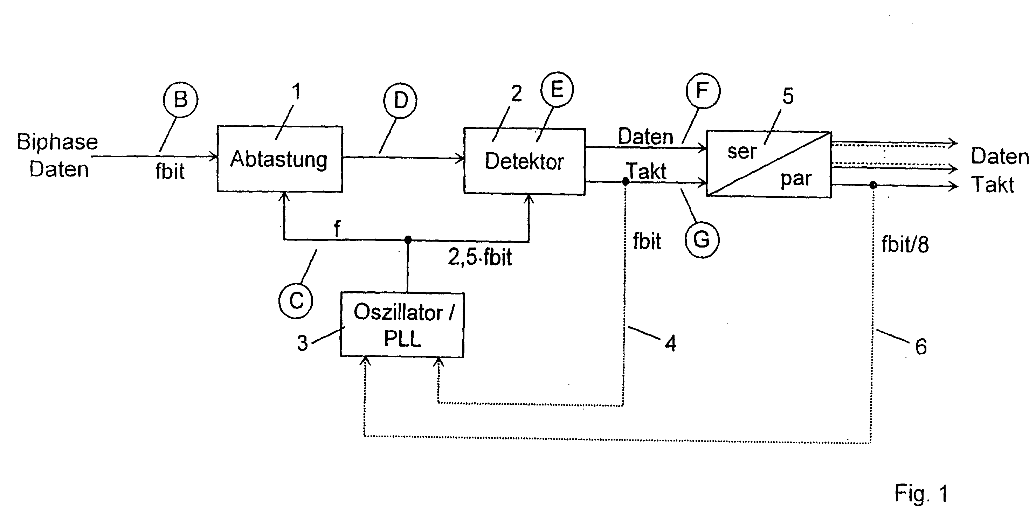

Figur 1 zeigt das Blockschaltbild einer erfindungsgemäßen Anordnung zum Ausführen des erfindungsgemäßen Verfahrens, Figur 2 zeigt die zugehörigen Signalverläufe.

Das aus dem NRZ-Datensignal A abgeleitete und zu regenerierende Biphase-markcodierte Datensignal B wird empfangsseitig einer Abtastschaltung 1 zugeführt, der ein Detektor 2 nachgeordnet ist. Die Abtastfrequenz C für die Abtastschaltung 1 bzw. die Taktfrequenz für den Detektor 2 liefert ein phasengeregelter Oszillator 3, dessen Ausgangsfrequenz 2,5 mal so groß wie die Bitfrequenz des Datensignals B gewählt ist. Mit dem Abtastsignal C des Oszillators 3 wird in der Abtastschaltung 1 das Biphase-Datensignal B abgetastet und die dadurch gewonnenen Abtastwerte D werden dem Detektor 2 zugeführt. Um möglichst viele Abtastwerte zu erhalten, wird in der Abtastschaltung 1 sowohl mit der positiven als auch mit der negativen Flanke des Abtastsignals C abgetastet. Mit der 2,5-fachen Bitfrequenz als Abtastfrequenz ergeben sich theoretisch fünf Abtastwerte pro Datenbit. Abhängig von Einflüssen wie Datenjitter und Taktgenauigkeit der Biphase-Daten B können aber auch vier bzw. sechs Abtastwerte D für ein Datenbit auftreten. Dies wird im Detektor 2 festgestellt. Auf diese Weise können aus den aufeinanderfolgenden Abtastwerten D die Bitgrenzen E im Detektor festgestellt werden, denn nach dem Biphase-mark Code bedeutet ein Übergang zwischen Null und Eins entweder einen Wechsel zwischen den Datenbits des Datensignals B oder einen Wechsel in der Bitmitte. Wenn über den Detektor 2 also im Toleranzbereich von 4 bis 6 Abtastwerten ein Wechsel des logischen Zustandes Eins und Null festgestellt wird, bedeutet dies eine logische Null im regenerierten Datensignal F, wird dagegen in einem kürzeren Abstand beispielsweise bereits nach zwei logischen Eins ein Wechsel der Abtastwerte D festgestellt, so bedeutet dies eine Eins im regenerierten Datensignal F. Aus diesen so regenerierten Datenbits F des Originalsignals A kann dann auf einfache Weise die zugehörige Bittaktfrequenz G regeneriert werden. -Damit sind sowohl die Datenbits als auch der Bittakt des ursprünglichen Datensignals A regeneriert. Der Detektor 2 kann sehr tolerant ausgelegt werden, es ist nur erforderlich, daß er in dem Ausführungsbeispiel die Bits mit 4,5 oder 6 Abtastwerten sicher erkennt. Damit ist der Detektor tolerant gegenüber Datenjittcr und Taktgenauigkeit. Noch genauer wird die Daten- und Taktrückgewinnung, wenn der Oszillator 3 auf den so rückgewonnenen Bittakt G synchronisiert wird, wie dies in Figur 1 durch die Wirkverbindung 4 schematisch angedeutet ist.

Die seriell regenerierten Datenbits F mit zugehörigem Bittakt G können anschließend in bekannter Weise über einen Serien/Parallel-Wandler 5 in Paralleldaten umgesetzt werden, der dadurch gewonnene Bytetakt kann im Sinne der Wirkverbindung 6 gemäß Figur 1 ebenfalls zur Synchronisierung des Oszillators 3 benutzt werden, um den Abtasttakt genau auf die Biphase-Daten zu synchronisieren.

## Patentansprüche

1. Verfahren zur Daten- und Taktrückgewinnung bei einem Biphase-codierten Datensignal, wobei
das Datensignal mit einer Abtastfrequenz abgetastet wird, die größer als die doppelte Bitfrequenz des Datensignals ist, **dadurch gekennzeichnet, daß** aus den so gewonnenen Abtastwerten die Bitgrenzen des Datensignals bestimmt werden,
und daraus dann die Datenbits und der zugehörige Bittakt des Datensignals regeneriert werden.

2. Verfahren nach Anspruch 1,
**dadurch gekennzeichnet,**
**daß** die Abtastfrequenz 2,5 mal so groß wie die Bitfrequenz gewählt ist.

3. Verfahren nach Anspruch 1 oder 2,
**dadurch gekennzeichnet,**
**daß** mit dem regenerierten Bittakt der die Abtastfrequenz erzeugende Taktgenerator synchronisiert wird.

4. Verfahren nach einem der vorhergehenden Ansprüche,
**dadurch gekennzeichnet,**
**daß** das regenerierte serielle Datensignal parallelgewandelt wird und mit dem dabei gewonnenen Bytetakt der Taktgenerator synchronisiert wird.

5. Anordnung zum Ausführen eines Verfahrens nach einem der Ansprüche 1 bis 4 mit
einer Abtastschaltung (1), einem die Abtastfrequenz (C) erzeugenden phasensynchronisierten Oszillator (3) mit einer Abtastfrequenz von mindestens dem 2,5-fachen der Bitfrequenz, **gekennzeichnet durch** einen nachfolgenden Detektor (2), der mit der Abtastfrequenz (C) des phasengeregelten Oszillators (3) getaktet ist und in welchem aus den Übergängen zwischen den logischen Zuständen (Null, Eins) der Abtastwerte (D) die Bitgrenzen (E) des Datensignals bestimmt werden, aus denen dann die Datenbits (F) und der zugehörige Bittakt (G) regeneriert werden.

## Claims

1. Method for data and clock recovery in a biphase-coded data signal,
the data signal being sampled using a sampling frequency which is greater than double the bit frequency of the data signal, **characterised in that**
the bit limits of the data signal are determined from the sampled values obtained in this way
and the data bits and the associated bit clock of the data signal are then regenerated therefrom.

2. Method according to Claim 1,
**characterised in that**
the sampling frequency is selected to be 2.5 times as great as the bit frequency.

3. Method according to Claim 1 or 2,
**characterised in that**
the clock generator generating the sampling frequency is synchronised using the regenerated bit clock.

4. Method according to one of the preceding claims,
**characterised in that**
the regenerated serial data signal is parallel-converted and the clock generator is synchronised using the byte clock obtained in this case.

5. Arrangement for carrying out the method according to one of claims 1 to 4, having
a sampling circuit (1), a phase-synchronised oscillator (3) generating the sampling frequency (C) with a sampling frequency of at least 2.5 times the bit frequency,
**characterised by** a downstream detector (2), which is
clocked with the sampling frequency (C) of the phase-locked oscillator (3) and in which the bit limits (E) of the data signal are determined from the transitions of the sampled values (D) between the logical states (zero, one), and the data bits (F) and the associated bit clock (G) are then regenerated therefrom.

## Revendications

1. Procédé pour la récupération de données et de cadence dans un signal de données codées selon un codage biphase, selon lequel le signal de données est échantillonné avec une fréquence d'échantillonnage qui est supérieure au double de la fréquence des bits du signal de données,
**caractérisé en ce que** les limites des bits du signal de données sont déterminées à partir des valeurs d'échantillonnage ainsi obtenues, et
à partir de là les bits de données et la cadence binaire associée du signal de données sont régénérées.

2. Procédé selon la revendication 1, **caractérisé en ce que** la fréquence d'échantillonnage est choisie 2,5 fois supérieure à la fréquence des bits.

3. Procédé selon la revendication 1 ou 2,
**caractérisé en ce que** le générateur de cadence, qui produit la fréquence d'échantillonnage, est synchronisé sur la cadence binaire régénérée.

4. Procédé selon l'une des revendications précédentes, **caractérisé en ce que** le signal de données en série régénéré est converti en parallèle et le générateur de cadence est synchronisé avec la cadence d'octets alors obtenue.

5. Dispositif pour la mise en oeuvre du procédé selon l'une des revendications 1 à 4, comportant
un circuit d'échantillonnage (1), un oscillateur (3) synchronisé en phase et produisant la cadence d'échantillonnage (C) et possédant une fréquence d'échantillonnage égale à au moins 2,5 fois la fréquence de bits, **caractérisé par** un détecteur aval (2), qui est cadencé avec la fréquence d'échantillonnage (C) de l'oscillateur (3) à phase réglée et avec lequel, à partir des transitions entre les états logiques (zéro, un) des valeurs d'échantillonnage (D), les limites (E) des bits du signal de données sont déterminées, à partir desquelles les bits de données (F) et la cadence binaire associée (G) sont alors régénérées.
